Europäisches Patentamt

European Patent Office

Office européen des brevets

(19)

(11) Veröffentlichungsnummer: **0 077 457**
**B1**

# EUROPÄISCHE PATENTSCHRIFT

(12)

(45) Veröffentlichungstag der Patentschrift:
26.02.86

(51) Int. Cl.⁴: **B 23 B 31/30**

(21) Anmeldenummer: **82107957.1**

(22) Anmeldetag: **30.08.82**

(54) Umlaufender Druckmittelzylinder.

(30) Priorität: **17.10.81 DE 3141349**

(43) Veröffentlichungstag der Anmeldung:
**27.04.83 Patentblatt 83/17**

(45) Bekanntmachung des Hinweises auf die Patenterteilung:
**26.02.86 Patentblatt 86/9**

(84) Benannte Vertragsstaaten:
**AT BE CH FR GB IT LI SE**

(56) Entgegenhaltungen:
**DE - A - 1 941 672**
**US - A - 1 934 411**
**US - A - 3 793 925**

(73) Patentinhaber: **Paul Forkardt GmbH & Co. KG,
Rosenstrasse 44-46, D-4000 Düsseldorf 1 (DE)**

(72) Erfinder: **Steinberger, Josef, Sebastiansweg 30,
D-4000 Düsseldorf 1 (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

**Beschreibung**

Die Erfindung betrifft einen umlaufenden Druckmittelzylinder, insbesondere zur Betätigung von Spannfuttern, mit einem in einem Gehäuse axial vershiebbar geführuten, beidseitig mit Druckmittel beaufschlagbaren Kolben, dessen Kolbenstange abgedichtet aus dem Gehäuse herausgeführt ist. Ein solcher zylinder ist z.B. aus der US—A—193 4411 bekannt.

Bei einer Verwendung umlaufender Druckmittelzylinder zur Betätigung von Spannfuttern dienen die Druckmittelzylinder häufig nicht nur der radialen Verstellung der Spannbacken im Arbeitsbereich des Spannfutters, sondern auch zur Überführung des Betätigungsgliedes der Spannbacken in eine außerhalb des Arbeitsbereiches liegende Endstellung, in der die Spannbacken von ihrem Antriebsglied entkuppelt sind oder entkuppelt werden können. Um bei einem derartigen zusätzlichen Verschiebeweg des Druckmittelkolbens und damit des Spannfutter-Betätigungselements sicherzustellen, daß die vom Betätigungselement entkuppelten Spannbacken nicht aus dem Futterkörper herausgeschleudert werden können, wenn die Spindel der Werkzeugmaschine in Umdrehungen ver setzt wird, sind bei bekannten Druckmittelzylindern elektrische oder hydraulische Maßnahmen getroffen worden, um ein Anlaufen der Werkzeugmaschinenspindel zu verhindern, wenn sich der Druckmittelkolben und damit das Spannfutter-Betätigungselement außerhalb des Arbeitsbereiches befinden. Zu diesem Zweck wird der axiale Weg des Druckmittelkolbens mittels Endschaltern abgetastet, die beispielsweise ein Magnetventil steuern, das den Zu- oder Abfluß des Druckmittels zur Betätigung des Druckmittelzylinders sperrt, wodurch die Bewegung des Druckmittelkolbens an einem gewünschten Punkt gestoppt wird. Ein weiteres Verschieben des Druckmittelkolbens ist nur möglich, wenn die Werkzeugmaschinenspindel still steht. Auch durch rein elektrische Schaltmaßnahmen kann dafür gesorgt werden, daß der Druckmittelzylinder nur dann seinen Zusatzweg ausführt, wenn die Werkzeugmaschinenspindel still steht.

Da es sich bei den bekannten hydraulischen und elektrischen Schaltmaßnahmen um verhältnismäßig störanfällige Bauteile handelt, die zudem von der richtigen Einstellung und von der Funktion von Wegschaltern oder ähnlichen Überwachungselementen abhängig sind, besteht bei den bekannten Sicherheitsvorrichtungen die Gefahr, daß durch den Ausfall von Schaltmitteln der Druckmittelkolben unbeabsichtigt über den Arbeitsbereich hinaus in eine Stellung gelangt, in der die Spannbacken des Spannfutters aus dem Eingriff mit ihrem Betätigungselement herausgetreten sind. Bei einem Anlaufen der Werkzeugmaschinenspindel können somit die Spannbacken aus dem Futterkörper herausgeschleudert werden.

Der Erfindung liegt die Aufgabe zugrunde, einen umlaufenden Druckmittelzylinder der eingangs beschriebenen Art zu schaffen, dessen Kolben unabhängig vom Funktionieren elektrischer oder hydraulischer Schaltmittel durch Formschluß innerhalb seines vorgegebenen Arbeitsbereiches gehalten wird und nur dann eine Zusatzbewegung ausführen kann, wenn Aktivmaßnahmen getroffen werden, um die formschlüssige Begrenzung des Kolbenhubes aufzuheben.

Die Lösung dieser Aufgabenstellung dieser Erfindung ist dadurch gekennzeichnet, daß im Gehäuse mindestens ein Anschlagelement radial beweglich geführt ist, das in seiner radial außenliegenden Endstellung den axialen Bewegungsbereich des Kolbens durch formschlüssige Anlage begrenzt und das entgegen der Kraft einer Rückstellfeder in seine radial innenliegende, den vollen Bewegungsbereich des Kolbens freigebende Endstellung überführbar ist.

Durch diese erfindungsgemäße Ausgestaltung eines umlaufenden Druckmittelzylinders wird sichergestellt, daß das radial beweglich im Gehäuse geführte Anschlagelement den axialen Bewegungsbereich des Kolbens auf den eigentlichen Arbeitsbereich des Druckmittelzylinders begrenzt, und zwar im Stillstand des Druckmittelzylinders durch Federkraft, die bei umlaufendem Druckmittelzylinder zusätzlich durch die Fliehkraft unterstützt wird, wobei die Fliehkraft bei gebrochener Rückstellfeder ausreicht, das Anschlagelement in die Verriegelungsstellung zu überführen. Erst durch eine gezielte Steuermaßnahme ist es möglich, das Anschlagelement in seine radial innenliegende Endstellung zu überführen, in der es einen Zusatzweg für den Druckmittelkolben freigibt. Dieses Überführen in die radial innenliegende Stellung kann entweder von Hand oder durch eine Kraftbetätigung erfolgen, wobei die Sicherheit des erfindungsgemäßen Druckmittelzylinders auch durch die für eine derartige Kraftbetätigung notwendigen Schaltmittel nicht beeinträchtigt wird, weil ein Versagen dieser elektrischen oder hydraulischen Schaltmittel lediglich dazu führt, daß eine Bewegung des Druckmittelkolbens in eine außerhalb des eigentlichen Arbeitsbereiches liegende Stellung nicht möglich ist. Die volle Sicherheit der formschlüssigen Begrenzung des Kolbenhubes auf den Arbeitsbereich des Druckmittelzylinders wird somit auch bei einer kraftbetätigten Verschiebung des Anschlagelements aufrecht erhalten.

Bei einer bevorzugten Ausführungsform der Erfindung ist das Anschlagelement entgegen der Kraft der Rückstellfeder durch ein Druckmittel in seiner radial innenliegende Endstellung überführbar. Durch Schaltmittel wird hierbei sichergestellt, daß das Anschlagelement ausschließlich bei stillstehendem Zylinder entgegen der Kraft der Rückstellfeder in seine radial innenliegende Endstellung überführbar ist. Das Druckmittel zur Beaufschlagung des Anschlagelements kann dem Gehäuse in an sich bekannter Weise durch ein Druckmittelüberleitungsgehäuse zugeführt werden.

Bei einer bevorzugten Ausbildung der Erfindung ist das Anschlagelement mit einer seitlichen Aussparung versehen, in die in der radial innenliegenden Endstellung des Anschlagelements das vordere Ende eines am Kolben in axialer Ausrichtung angeordneten Führungsgliedes eingreift. Hierdurch ergibt sich eine besonders einfache Ausgestaltung des Anschlagelements und seines Zusammenwirkens mit dem Druckmittelkolben, wobei das Führungsglied gemäß einem weiteren Merkmal der Erfindung zugleich als Verdrehsicherung des Kolbens gegenüber dem Gehäuse ausgebildet sein kann.

Sofern das radial außenliegende Ende des Anschlagelements erfindungsgemäß als gegenüber einer im Gehäuse ausgebildeten Bohrung abgedichteter Kolben ausgeführt wird, ergibt sich eine besonders einfache Konstruktion. Eine weitere Vereinfachung wird dadurch erreicht, daß das Führungsglied als in den Kolben eingesetzter Führungsbolzen ausgebildet wird, der mit seinem einen Ende mit einer Aussparung im Deckel des Gehäuses und mit seinem anderen Ende mit dem Anschlagelement zusammenwirkt.

Auf der Zeichnung ist ein Ausführungsbeispiel des erfindungsgemäßen Druckmittelzylinders dargestellt, und zwar zeigen:

Fig. 1 einen Längsschnitt durch den Druckmittelzyliner und

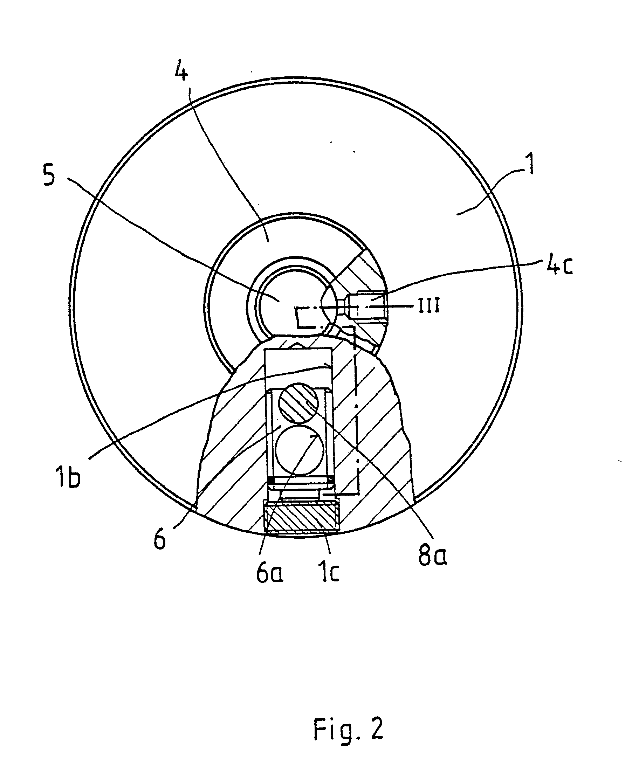

Fig. 2 eine im Bereich des Anschlagelements geschnittene Stirnansicht des Druckmittelzylinders.

Der Druckmittelzylinder besitzt ein Gehäuse 1 mit einer einseitigen zylindrischen Anbohrung 1a, welches durch einen Gehäusedeckel 2 verschlossen ist. Im Gehäuse 1 ist ein gegenüber der Anbohrung 1a abgedichteter Kolben 3 axial verschiebbar geführt, der mit einer durch den Gehäu-sedeckel 2 abgedichtet hindurchgeführten Kol-benstange 3a versehen ist. Über diese Kolbenstange 3a wird beispielsweise ein auf der Zeichnung nicht dargestelltes Spannfutter betätigt, welches ebenso wie das Gehäuse 1 des Druckmittelzylinders an der Spindel einer Werkzeugmaschine befestigt ist.

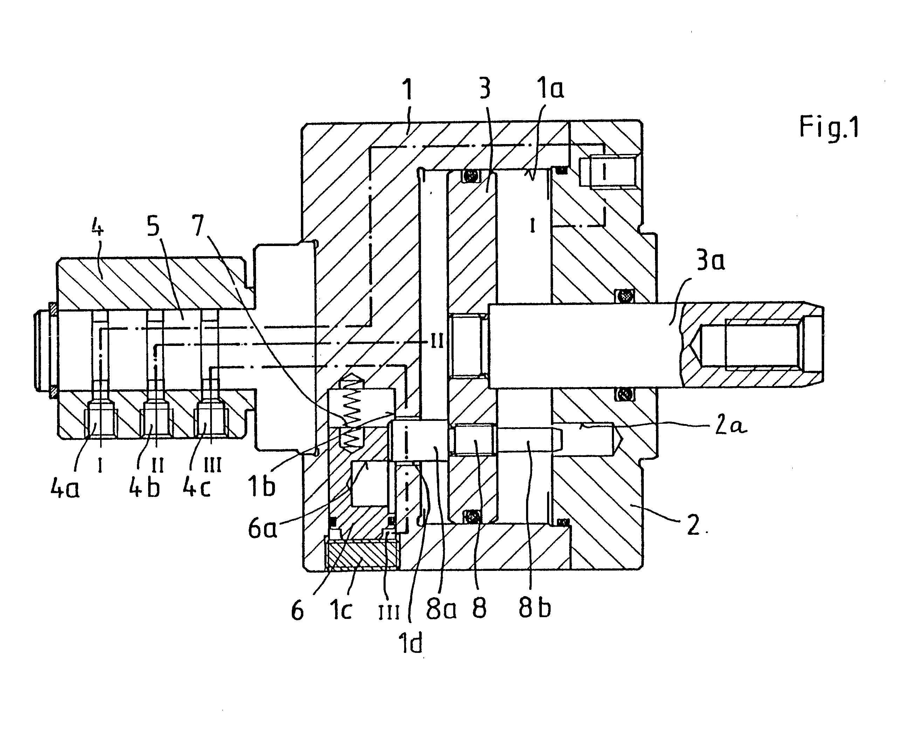

Die axiale Verstellung des Kolbens 3 im Gehäuse 1 erfolgt durch Druckmittel, welches mittels eines Druckmittelüberleitungsgehäuses 4 zugeführt wird. Dieses Druckmittelüberleitungsgehäuse 4 ist auf einem Lagerzapfen 5 drehbar gelagert, der an der dem Gehäusedeckel 2 gegenüberliegenden Stirnseite des Gehäuses 1 befestigt ist. Der Lagerzapfen 5 ist ebenso wie das Gehäuse 1 und der Gehäusedeckel 2 mit in Fig. 1 strichpunktiert angedeuteten Druckmittelkanälen versehen, über welche der Kolben 3 sowohl auf seiner Kolbenbodenseite als auch auf seiner Kolbenstangenseite mit Druckmittel beaufschlagbar ist. Dieses Druckmittel wird dem Druckmittel-überleitungsgehäuse 4 durch den Druckmittel-anschluß 4a bzw. 4b zugeführt und gelangt entweder in den mit I oder in den mit II bezeichneten Zuführstrang. Da die Zufuhr des Druckmittels bei stillstehendem Druckmittelüberleitungsgehäuse 4 und umlaufendem Gehäuse 1 möglich ist, kann der Kolben 3 bei rotierender Spindel axial im Gehäuse 1 verschoben werden.

Um die Verschiebebewegung des Kolbens 3 auf den jeweils vergegebenen Arbeitsbereich zu beschränken, ist im Gehäuse 1 mindestens ein Anschlagelement 6 radial beweglich angeordnet. Bei der dargestellten Ausführungsform befindet sich das als Kolben ausgebildete Anschlagelement 6 in einer zylindrischen Radialbohrung 1b des Gehäuses 1. Es ist an seinem radial innenlie-genden Ende durch eine Rückstellfeder 7 belastet. Die radial außenliegende Stirnfläche des Anschlagelements 6 ist mit Druckmittel beaufschlagbar, das durch einen Druckmittelanschluß 4c am Druckmittelüberleitungsgehäuse 4 über einen Leitungsstrang III einem Druckraum zuführ-bar ist, welcher nach außen durch einen in das Gehäuse 1 eingesetzten Stopfen 1c verschlossen ist.

In den Kolben 3 ist ein axial ausgerichteter Führungsbolzen 8 eingesetzt, dessen aus dem Kolbenboden hervorstehendes Vorderteil 8a mit dem Anschlagelement 6 zusammenwirkt. Befindet sich das Anschlagelement 6 infolge der Kraft der Rückstellfeder 7 und ggf. der Fliehkraft in seiner radial außenliegenden Endstellung, wie sie in Fig. 1 dargestellt ist, kommt das Vorderteil 8a des Führungsbolzens 8 am Anschlagelement 6 zur formschlüssigen Anlage, sobald der Kolben 3 seine linke Endstellung des Arbeitsbereiches erreicht hat. Das Vorderteil 8a des Führungsbol-zens 8 ragt hierbei durch eine Öffnung 1d des Gehäuse 1 hindurch, wie dies in Fig. 1 zu erkennen ist. Hierdurch erfolgt mittels des Anschlagelements 6 eine formschlüssige Begrenzung des Hubes des Kolbens 3 in Gehäuse 1, wobei der begrenzte Hub dem Arbeitsbereich des Kolbens 3 entspricht.

Soll der Kolben 3 über den Arbeitsbereich hinaus weiter in Richtung auf das Druckmittelüberleitungsgehäuse 4 verschoben werden, ist es erforderlich, das Anschlagelement 6 entge-gen der Kraft der Rückstellfeder 7 in seine radial innenliegende Stellung zu überführen. Beim Ausführungsbeispiel geschieht dies mittels des durch den Druckmittelanschluß 4c zugeführten Druckmittels, daß das als Kolben ausgebildete Anschlagelement 6 radial nach innen verschiebt. In der radial innenliegenden Endstellung kann das Vorderteil 8a des Führungsbolzens 8 in eine seitliche Anbohrung 6a des Anschlagelements 6 eintreten, so daß eine bewußte Aufhebung der formschlüssigen Hubbegrenzung für den Kolben 3 möglich ist. Aufgrund dieser Zusatzbewegung des Kolbens 3 über seinen eigentlichen Arbeitsbereich hinaus ist es beispielzweise möglich, bei einem vom Druckmittelzylinder betriebenen Spannfutter das Betätigungsglied der Spannbacken in eine solche Stellung zu bringen, in der die Spannbacken vom Betätigungsglied en-kuppelt sind und aus dem Futterkörper herausgenommen werden können.

Durch geeignete Schaltmittel wird bei dem voranstehend beschriebenen Druckmittelzylinder sichergestellt, daß das als Kolben ausgebildete Anschlagelement 6 nur dann in seine radial innenliegende Endstellung überführt wirde, wenn die das Gehäuse 1 tragende Spindel der Werkzeugmaschine stillsteht. Auch ein erneuter Antrieb der Spindel ist nur dann möglich, wenn die Druckmittelzufuhr zum Anschlagelement 6 über den Druckmittelanschluß 4c unterbrochen ist, so daß das Anschlagelement 6 mittels der Rückstellfeder 7 in seine radial außenliegende, in Fig. 1 dargestellte Endstellung überführt worden ist, in der eine Bewegung des Kolbens 3 nur innerhalb seines eigentlichen Arbeitsbereiches erfolgen kann.

Auch auf der Seite der Kolbenstange 3a ragt beim Ausführungsbeispiel der Führungsbolzen 8 mit einer Verlängerung 8b aus dem Kolben 3 heraus. Diese Verlängerung ragt mindestens im Arbeitsbereich des Kolbens 3 in eine Aussparung 2a des Gehäusedeckels 2, so daß der Führungsbolzen 8 zugleich als Verdrehsicherung des Kolbens 3 genenüber dem Gehäuse 1 wirkt.

Bezugsziffernliste:

1     Gehäuse

1a     zylindrische Anbohrung

1b     Radialbohrung

1c     Stopfen

1d     Öffnung

2     Gehäusedeckel

2a     Aussparung

3     Kolben

3a     Kolbenstange

4     Druckmittelüberleitungsgehäuse

4a     Druckmittelanschluß

4b     Druckmittelanschluß

4c     Druckmittelanschluß

5     Lagerzapfen

6     Anschlagelement

6a     Anbohrung

7     Rückstellfeder

8     Führungsbolzen

8a     Vorderteil

8b     Verlängerung

**Patentansprüche**

1. Umlaufender Druckmittelzylinder, insbesondere zur Betätigung von Spannfuttern, mit einem in einem Gehäuse (1) axial verschiebbar geführten, beidseitig mit Druckmittel beaufschlagbaren Kolben (3), dessen Kolbenstange (3a) abgedichtet aus dem Gehäuse herausgeführt ist, dadurch gekennzeichnet, daß im gehäuse (1) mindestens ein Anschlagelement (6) radial beweglich geführt ist, das in seiner radial außenliegenden Endstellung den axialen Bewegungsbereich des Kolbens (3) durch formschlüssige Anlage begrenzt und das entgegen der Kraft einer Rückstellfeder (7) in seine radial innenliegende, den vollen Bewegungsbereich des Kolbens (3) freigebende Endstellung überführbar ist.

2. Druckmittelzylinder nach Anspruch 1, dadurch gekennzeichnet, daß das Anschlagelement (6) entgegen der Kraft der Rückstellfeder (7) durch ein Druckmittel in seine radial innenliegende Endstellung überführbar ist.

3. Druckmittelzylinder nach Anspruch 1 und 2, dadurch gekennzeichnet, daß durch Schaltmittel sichergestellt ist, daß das Anschlagelement (6) ausschließlich bei stillstehendem Zylinder entgegen der Kraft der Rückstellfeder (7) in seine radial innenliegende Endstellung überführbar ist.

4. Druckmittelzylinder nach den Ansprüchen 1 bis 3, dadurch gekennzeichnet, daß das Druckmittel zur Beaufschlagung des Anschlagelements (6) dem Gehäuse (1) in an sich bekannter Weise durch ein Druckmittelüberleitungsgehäuse (4) zuführbar ist.

5. Druckmittelzylinder nach mindestens einem der Ansprüche 1 bis 4, dadurch gekennzeichnet, daß das Anschlagelement (6) mit einer seitlichen Aussparung (6a) versehen ist, in die in der radial innenliegenden Endstellung des Anschlagelements (6) das vordere Ende eines am Kolben (3) in axialer Ausrichtung angeordneten Führungsgliedes (8) eingreift.

6. Druckmittelzylinder nach Anspruch 5, dadurch gekennzeichnet, daß das Führungsglied (8) zugleich als Verdrehsicherung des Kolbens (3) gegenüber dem Gehäuse (1) ausgebildet ist.

7. Druckmittelzylinder nach mindestens einem der Ansprüche 1 bis 6, dadurch gekennzeichnet, daß das radial außenliegende Ende des Anschlagelements (6) als gegenüber einer im Gehäuse (1) ausgebildeten Radialbohrung (1b) abgedichteter Kolben ausgebildet ist.

8. Druckmittelzylinder nach Anspruch 7, dadurch gekennzeichnet, daß das Führungsglied als in den Kolben (3) eingesetzter Führungsbolzen (8) ausgebildet ist, der mit seinem einen Ende mit einer Aussparung (2a) im Deckel (2) des Gehäuses (1) und mit seinem anderen Ende mit dem Anschlagelement (6) zusammenwirkt.

**Revendications**

1. Vérin tournant à fluide de pression, notamment pour actionner des mandrins de serrage, avec un piston (3) guidé pour coulisser en direction axiale dans un carter (1) et pouvant être sollicité des deux côtés par le fluide de pression, la tige de piston (3a) étant guidée de façon étanche à l'extérieut du carter, caractérisé en ce que dans le carter (1) au moins un élément d'e butée (6) est guidé en déplacement radial, cet élément limitant, dans sa position radiale extérieure extrême la course de déplacement axial du piston (3) grâce à sa forme de butée, et étant déplaçable à l'encontre de la force d'un ressort de rappel (7) vers sa position radiale intérieure extrême libérant la course complète du piston (3).

2. Vérin à fluide de pression selon la revendication 1, caractérisé en ce que l'élément de butée (6) peut être repoussé dans sa position radiale intérieure extrême par un fluide de pression à l'encontre la force du ressort de rappel (7).

3. Vérin à fluide de pression selon les revendications 1 et 2, caractérisé en ce que par des moyens de commande on garantit que l'élément de butée (6) ne puisse être repoussé dans sa position radiale intérieure extrême à l'encontre de la force du ressort de rappel (7) que si le vérin est au repos.

4. Vérin à fluide de pression selon les revendications 1 et 3, caractérisé en ce que le fluide de pression destiné à solliciter l'élement de butée (6) peut être transféré au carter (1) de façon connue en soi par un corps (4) de transfert de fluide de pression.

5. Vérin à fluide de pression selon au moins l'une des revendications 1 à 4, caractérisé en ce que l'élément de butée (6) est muni d'un évidement latéral (6a) dans laquel s'engage, dans la position radiale intérieure extrême de l'élément de butée (6), l'extrémité avant d'un organe pilote (8) disposé en direction axiale sur le piston (3).

6. Vérin de pression selon la revendication 5, caractérisé en ce que l'organe pilote (8) est agencé en même temps sous forme d'organe de sécurité contre la rotation du piston (3) par rapport au carter (1).

7. Vérin à fluide de pression selon au moins l'une des revendications 1 à 6, caractérisé en ce que l'extrémité radial extérieure de l'élément de butée (6) est conformeede façon à jouer le rôle de piston d'étanchéité vis-à-vis d'un alésage radial (1b) formé dans le carter (1).

8. Vérin à fluide de pression selon la revendication 7, caractérisé en ce que l'organe pilote est réalisé sous forme de cheville pilote (8) introduite dans le piston (3), cette cheville coopérant par l'une de ses extrémités avec un évidement (2a) du couvercle (2) du carter (1) et par son autre extrémité avec l'élément de butée (6).

**Claims**

1. A rotatable pressure medium cylinder, particularly for the actuation of chucks, with a piston (3) axially slidably guided in a housing (1), both sides being actable on by pressure medium, the piston rod (3a) of which piston is sealingly guided out of the housing, characterised in that at least one strike member (6) is radially movable guided in the housing (1), the member, in its radially outer end position, limits the axial stroke of the piston (3) by positive engagement and the member is movable into its radially inner end position against the force of a return spring enabling the full stroke of the piston (3).

2. A pressure medium cylinder according to claim 1, characterised in that the strike member (6) is movable against the force of the return spring (7) by a pressure medium to its radially inner end position.

3. A pressure medium cylinder according to claims 1 and 2, characterised in that it is ensured by switching means that the strike member (6) is only movable against the force of the return spring (7) to its radially inner end position when the cylinder is motionless.

4. A pressure medium cylinder according to claims 1 to 3, characterised in that the pressure medium for acting on the strike member (6) can be supplied to the housing in *per se* known manner by a pressure medium conducting housing (4).

5. A pressure medium cylinder according to at least one of claims 1 to 4, characterised in that the strike member (6), is provided with a lateral recess (6a) into which, in the radially inner end position of the strike member (6), the forward end of a guide member (8) disposed on the piston (3) in axial alignment, engages.

6. A pressure medium cylinder according to claim 5, characterised in that the guide member (8) is formed also for preventing the rotation of the piston (3) relative to the housing (1).

7. A pressure medium cylinder according to at least one of claims 1 to 6, characterised in that the radially outer end of the strike member (6) is formed as a piston sealed relative to a radial bore (1b) formed in the housing (1).

8. A pressure medium cylinder according to claim 7, characterised in that the guide member is formed as a guide pin (8) inserted into the piston (3), which pin cooperates with its one end with a recess (2a) in the cover (2) of the housing, and with its other end with the strike member (6).

Fig.1

0 077 457

Fig. 2